# EUROPEAN PATENT APPLICATION

(11) **EP 1 628 389 A2**
(43) Date of publication of application: **22.02.2006**
(21) Application number: 05017762.5
(22) Date of filing: 16.08.2005
(51) Int. Cl.: H02P 5/74

(54) **Servo motor driving apparatus and servo motor driving method**

(30) Priority: 20.08.2004 JP 2004240934
(71) Applicant: FANUC LTD, Minamitsuru-gun, Yamanashi 401-0597 (JP)
(72) Inventor: Okamoto, Takashi, Fanuc Manshonharimomi 3515-1, Minamitsuru-gun Yamanashi 401-0511 (JP); Yamaguchi, Akira, Minamitsuru-gun Yamanashi 401-0511 (JP); Hanyu, Shigeki, Room7-103, Fanuc Manshonharimomi, Yamanashi 401-0511 (JP); Yamada, Yuuichi, Fanuc Manshonharimomi, Room 6-101, Minamitsuru-gun Yamanashi 401-0511 (JP)
(74) Representative: Schmidt, Steffen J.

(57) **Abstract**

An object of the present invention is to provide a servo motor driving apparatus and a servo motor driving method for driving a plurality of servo motors, wherein provisions are made to improve the reuse efficiency of servo motor regenerative energy. The servo motor driving apparatus (2) comprises: a plurality of inverter circuits (4, 4', 4") which supply AC power to the plurality of servo motors (5, 5', 5"), respectively; a converter circuit (3) which supplies electric power in common to the inverter circuits (4, 4', 4"); and an inverter control unit (6) which, when giving an acceleration command to any one of the servo motors, gives a deceleration command to another one of the servo motors at the same time.

## Description

### BACKGROUND OF THE INVENTION

### 1. Field of the Invention

The present invention relates to a servo motor driving apparatus and method in which AC power is converted by a converter circuit into DC power and the DC power is further converted by an inverter circuit into AC power and is supplied to a servo motor to drive the servo motor. More particularly, the invention relates to a servo motor driving apparatus and method for driving a plurality of servo motors, coupled to a moving mechanism, to supply motive power to the moving mechanism.

### 2. Description of the Related Art

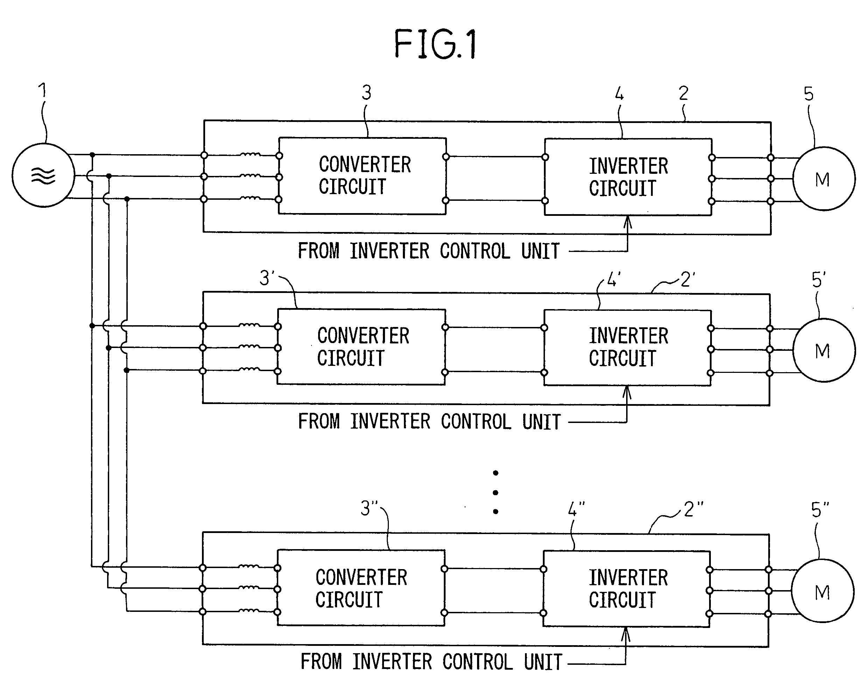

Figure 1 is a diagram for explaining a prior art apparatus for driving a plurality of servo motors. The plurality of servo motors 5, 5', ..., 5" are connected to inverter apparatuses 2, 2', ..., 2", respectively, which derive electric power from a three-phase AC power supply 1.

In the inverter apparatuses 2, 2', ..., 2", the AC power supplied from the three-phase AC power supply 1 is converted by respective converter circuits 3, 3', ..., 3" into DC power, which is further converted into three-phase AC power having a desired frequency and voltage by respective inverter circuits 4, 4', ..., 4" under control of an inverter control unit (such as a PWM control circuit, not shown here), and the AC power thus produced is supplied to the respective servo motors 5, 5', ..., 5".

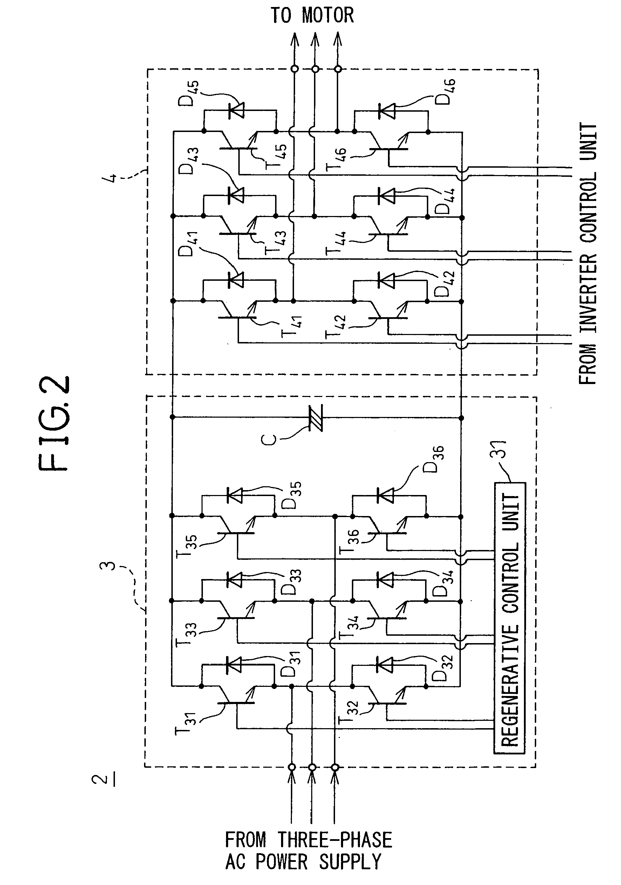

Figure 2 is a diagram showing one configuration example of the prior art inverter apparatuses 2, 2', ..., 2" of Figure 1. In Figure 2, the configuration of only the inverter apparatus 2 is shown, and the configurations of the other inverter apparatuses 2', ..., 2" are not shown, but all of the inverter apparatuses 2, 2', ..., 2" are identical in configuration.

The converter circuit 3 comprises: a bridge circuit constructed from power devices (for example, transistors) T₃₁ to T₃₆ and diodes D₃₁ to D₃₆ connected in reverse and in parallel with the respective power devices; and a power storage part C (for example, a capacitor) for smoothing the output of the converter circuit 3, and for storing the regenerative power occurring due to the induced electromotive force produced in the motor 5 when the motor 5 is decelerated or caused to stop.

During the normal power operation of the motor 5, the converter circuit 3 converts the AC power supplied from the three-phase AC power supply 1 into DC power by performing full-wave rectification using the diodes D₃₁ to D₃₆. On the other hand, during the regenerative operation of the motor 5, the converter circuit 3 can feed the regenerative power back into the power supply 1 by driving the power devices T₃₁ to T₃₆ with regenerative control unit 31 synchronously with the phases of the three-phase AC power supply 1.

The inverter circuit 4 comprises a bridge circuit formed by transistors T₄₁ to T₄₆ and diodes D₄₁ to D₄₆ connected in parallel with the respective transistors. Then, an AC voltage having a desired voltage and frequency is generated by controlling the ON/OFF operations of the transistors T₄₁ to T₄₆ by an inverter control unit (not shown) which is, for example, a transistor PWM control circuit, and the speed of the motor 5 is controlled by supplying the AC voltage to the motor 5.

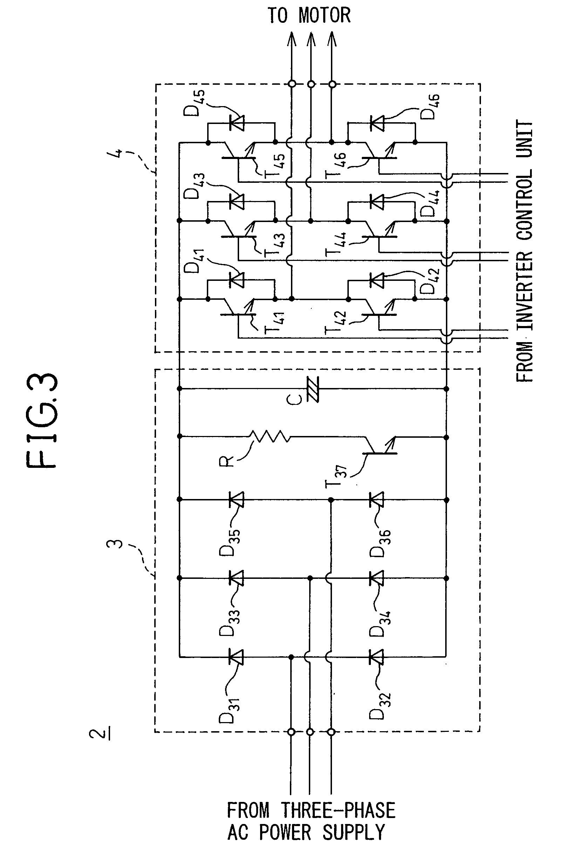

Figure 3 is a diagram showing another configuration example of the prior art inverter apparatuses 2, 2', ..., 2" of Figure 1. As in Figure 2, the configuration of only the inverter apparatus 2 is shown here, and the configurations of the other inverter apparatuses 2', ..., 2" are not shown.

In the inverter apparatus 2 shown in Figure 3, the converter circuit 3 full-wave rectifies the supply voltage by using a three-phase diode bridge circuit comprising diodes D₃₁ to D₃₆ instead of the bridge circuit comprising power devices and diodes connected in reverse parallel with the respective power devices. Further, the output terminals of the converter circuit 3 are connected by a regenerative resistor R; during the regenerative operation of the motor 5, transistor T₃₇ is turned on, causing the current to flow through the regenerative resistor R and thereby dissipating the regenerative energy in the form of heat energy (this is known as resistive regeneration).

In this way, the prior art servo motor driving apparatus for driving a plurality of servo motors 5 has been constructed to drive the servo motors by providing one inverter apparatus 2, comprising the converter circuit 3 and the inverter circuit 4, for each of the servo motors 5.

On the other hand, Japanese Unexamined Patent Publication No. 2002-113737 discloses an inverter apparatus that uses a single converter circuit to supply DC power to a plurality of inverter circuits to drive a plurality of servo motors.

### SUMMARY OF THE INVENTION

However, in the power line regeneration type inverter apparatus 2 shown in Figures 1 and 2, each servo motor 5 is driven by one inverter apparatus 2 and, to return the regenerative energy from the servo motor 5 back into the power supply, the regenerative energy must first be taken out of the inverter apparatus 2. As a result, an energy loss occurs in the power devices and the power supply lines in the converter circuit 3, resulting in the problem that the reuse efficiency of the regenerative energy is low. Furthermore, as most of the electric power required to drive the servo motor 5 is derived from the power supply via the converter circuit, there has been the problem in that the size of the converter circuit block increases.

On the other hand, in the resistive regeneration type inverter apparatus 2 shown in Figure 3, the regenerative energy from the servo motor 5 is dissipated in the form of heat energy. There has therefore been the problem that not only is it impossible to reuse the regenerative energy, but because of the need to prevent thermal breakdown of the regenerative resistor R due to excessive current flow, the voltage between the output terminals of the converter circuit during regeneration can be increased only a little, which imposes a design constraint.

In the inverter apparatus disclosed in Japanese Unexamined Patent Publication No. 2002-113737, the regenerative energy occurring from the motor during regeneration is not fed back into the power supply, but can be reused to power another motor operating in a normal power mode. However, such reuse of the regenerative energy is possible only in cases where, while a certain motor is operating in the normal power mode, some other motor temporarily enters the regenerative operation mode; therefore, in other cases, the resistive regeneration shown in Figures 1 and 3 has been performed. Therefore, the reuse of the regenerative energy has been greatly limited in practice.

In view of the above problems, it is an object of the present invention to provide a servo motor driving apparatus and a servo motor driving method for driving a plurality of servo motors, wherein provisions are made to improve the reuse efficiency of servo motor regenerative energy.

To achieve the above object, the servo motor driving apparatus according to the present invention comprises a plurality of inverter circuits for supplying AC power to a plurality of servo motors, respectively, and a converter circuit for supplying electric power in common to the inverter circuits, and provisions are made so that, when an acceleration command is given to any one of the servo motors, a deceleration command is given to another one of the servo motors at the same time.

More specifically, a servo motor driving apparatus according to a first aspect of the present invention is constructed to drive a plurality of servo motors including at least a first servo motor and a second servo motor, that are coupled to a moving mechanism to supply motive power to the moving mechanism, and comprises: a plurality of inverter circuits which supply AC power to the plurality of servo motors, respectively; a converter circuit which supplies electric power in common to the plurality of inverter circuits; and an inverter control unit which supplies an acceleration command for the first servo motor and a deceleration command for the second servo motor simultaneously to the inverter circuits corresponding to the respective servo motors.

Preferably, the first and second servo motors are coupled to the moving mechanism in such a manner that a torque produced by one of the motors is transmitted to the other one of the motors via the moving mechanism.

Here, the acceleration command for the first servo motor and the deceleration command for the second servo motor may be generated by a program executed on the inverter control unit, and may be given to the inverter control unit.

Further preferably, the inverter control unit may perform control so that, at least during a period that the deceleration command is given to the second servo motor, the acceleration command is given to the first servo motor at the same time.

Here, the inverter control unit may control the inverter circuits corresponding to the first servo motor and the second servo motor respectively so that torques produced by the respective motors are applied to the moving mechanism in such a manner as to oppose each other.

The moving mechanism may be, for example, a press mechanism. In this case, the first servo motor is used as a press shaft driving servo motor for the press mechanism, and the second servo motor is used as a die cushion driving servo motor.

The moving mechanism may be a cable winding mechanism. In this case, the first servo motor is used as a cable winding servo motor for the cable winding mechanism, and the second servo motor is used as a cable feeding servo motor.

The moving mechanism may be a printing medium winding mechanism to be used in a printing machine. In this case, the first servo motor is used as a winding servo motor for the printing medium winding mechanism, and the second servo motor is used as a feeding servo motor.

Further, in a servo motor driving method according to a second aspect of the present invention for driving at least the first servo motor and the second servo motor to supply motive power to the moving mechanism by deriving AC power from the respective inverter circuits that are supplied with electric power from a common converter circuit, normal power operation of the first servo motor and regenerative operation of the second servo motor are performed simultaneously. In this case, the torques produced by the first servo motor and the second servo motor, respectively, may be applied to the moving mechanism in such a manner as to oppose each other.

### BRIEF DESCRIPTION OF THE DRAWINGS

These and other objects and features of the present invention will become more fully apparent from the description of the preferred embodiments as set forth below with reference to the accompanying drawings.

Figure 1 is a diagram for explaining a prior art apparatus for driving a plurality of servo motors.

Figure 2 is a diagram showing a prior art example of an inverter apparatus shown in Figure 1.

Figure 3 is a diagram showing another prior art example of the inverter apparatus shown in Figure 1.

Figure 4 is a diagram schematically showing the configuration of an inverter apparatus which constitutes a servo motor driving apparatus according to an embodiment of the present invention.

Figure 5 is a diagram schematically showing the configuration of a converter circuit in the inverter apparatus shown in Figure 4.

Figure 6 is a diagram schematically showing the configuration of an inverter circuit in the inverter apparatus shown in Figure 4.

Figure 7 is a diagram for explaining the case where the motive power of the servo motors, driven by the servo motor driving apparatus according to the embodiment of the present invention, is supplied to a moving mechanism.

Figure 8 is a diagram schematically showing the structure of a press mechanism to which the motive power is supplied according to the embodiment of the present invention.

Figure 9 is a diagram schematically showing the structure of a winding mechanism to which the motive power is supplied according to the embodiment of the present invention.

### DETAILED DESCRIPTION

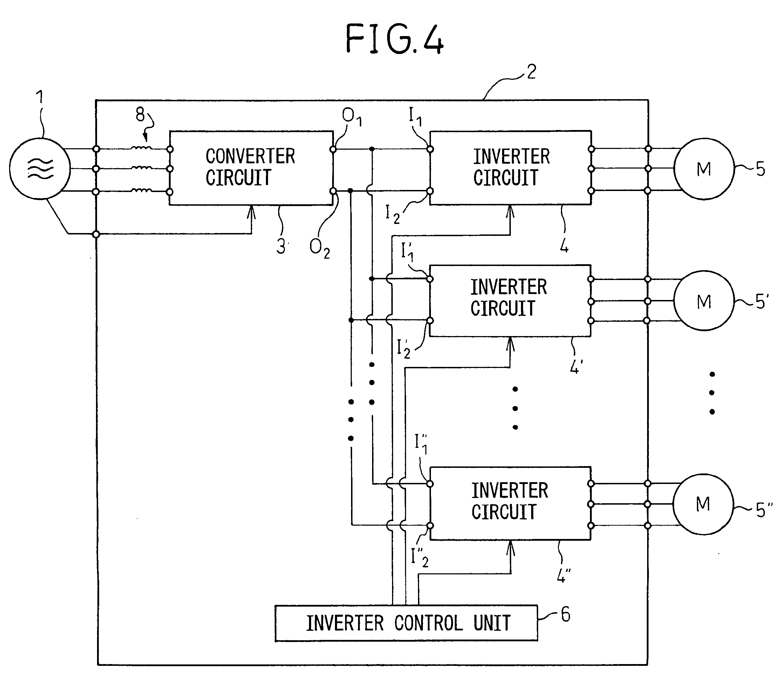

Preferred embodiments of the present invention will be described in detail below with reference to the accompanying drawings. Figure 4 is a diagram schematically showing the configuration of an inverter apparatus which constitutes a servo motor driving apparatus according to an embodiment of the present invention.

As shown, the inverter apparatus 2 comprises one converter circuit 3 and a plurality of inverter circuits 4, 4', ..., 4" to which common DC power is supplied from the converter circuit 3. The converter circuit 3 converts AC power, supplied from a three-phase AC power supply 1 via reactance 8, into DC power and outputs the DC power at its output terminals O₁ and O₂.

Input terminals I₁, I₁', ..., I₁", each being one input terminal of each of the inverter circuits 4, 4', ..., 4", are connected in common to the output terminal O₁, while the other input terminals I₂, I₂', ..., I₂" are connected in common to the output terminal O₂. In this configuration, under control of an inverter control unit 6 (for example, a PWM control circuit or the like), each of the inverter circuits 4, 4', ..., 4" supplied with the DC power from the converter circuit 3 converts the DC power into three-phase AC power having a desired frequency and voltage, and supplies this AC power to a corresponding one of the servo motors 5, 5', ..., 5".

The driving shafts of the servo motors 5, 5', ..., 5" are coupled to a moving mechanism (not shown), and the servo motors 5, 5', ..., 5" supply motive power to drive the moving mechanism.

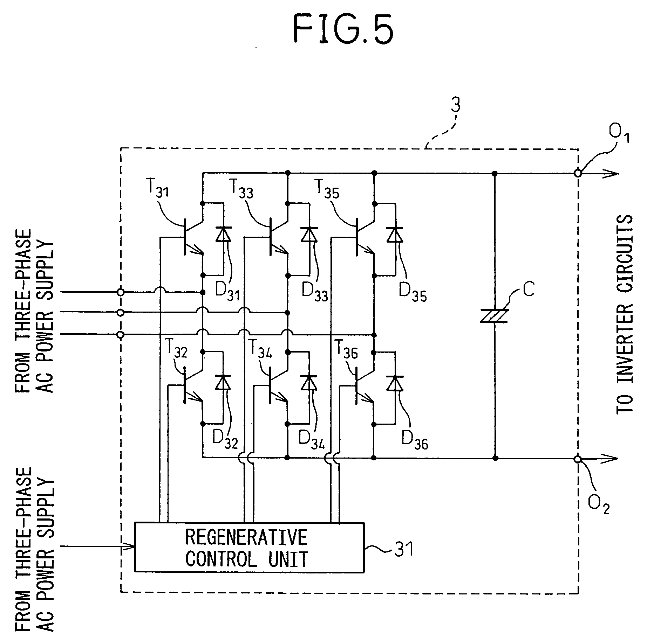

Figure 5 is a diagram schematically showing the configuration of the converter circuit 3 in the inverter apparatus 2 shown in Figure 4. The converter circuit 3 here has the same configuration as the converter circuit 3 shown in Figure 2. That is, the converter circuit 3 comprises: a bridge circuit constructed from power devices (for example, transistors) T₃₁ to T₃₆ and diodes D₃₁ to D₃₆ connected in reverse parallel with the respective power devices; a power storage part C (for example, a capacitor) for smoothing the output of the converter circuit 3, and for storing the regenerative power from the motor 5; and a regenerative control unit 31 for feeding the regenerative power back into the power supply 1 by driving the power devices T₃₁ to T₃₆ synchronously with the phases of the three-phase AC power supply 1. The operation of these elements of converter circuit 3 has been explained by reference to Figure 2, so a detailed description of the operation will not be given here.

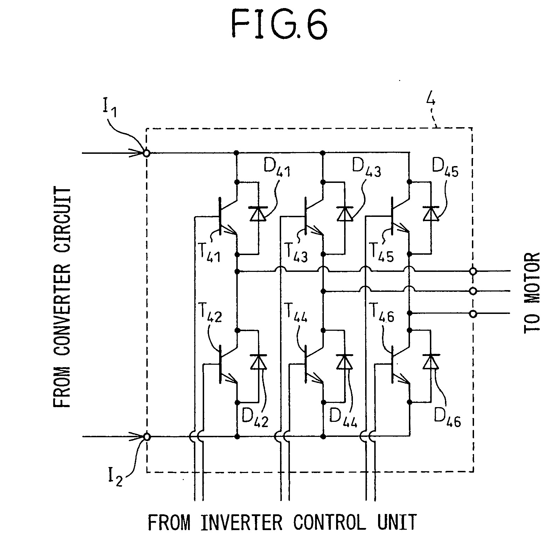

Figure 6 is a diagram schematically showing the configuration of the inverter circuit 4 in the inverter apparatus 2 shown in Figure 4. The inverter circuit 4 here has the same configuration as the inverter circuit 4 shown in Figure 2. That is, the inverter circuit 4 comprises a bridge circuit formed by transistors T₄₁ to T₄₆ and diodes D₄₁ to D₄₆ connected in parallel with the respective transistors. In Figure 6, the configuration only of the inverter circuit 4 is shown, and the configuration of the other inverter circuits 4', ..., 4" are not shown, but each of them has the same configuration as the inverter circuit 4.

The inverter control unit 6 is a control circuit (for example, a transistor PWM control circuit) implemented using a microcomputer or like processor, and generates ON/OFF switching signals for the transistors T₄₁ to T₄₆ in the inverter circuit 4 by the operation of a program executed on the microcomputer or the like. Then, by applying the ON/OFF switching signals as inverter control signals to the respective inverter circuits 4, 4', ..., 4", AC voltage, each having a desired voltage and frequency, are generated, and the AC voltage thus generated is supplied to the respective servo motors 5, 5', ..., 5" to control the speeds of the respective motors. Accordingly, the inverter control signals here (the ON/OFF switching signals for the transistors T₄₁ to T₄₆) provide acceleration/deceleration command signals for the servo motors 5, 5', ..., 5".

Further, the inverter control unit 6 operates in such a manner that when an acceleration command for any one or a designated one of the servo motors (for example, the servo motor 5) is given to the inverter circuit (for example, the inverter circuit 4) corresponding to that one servo motor, then at the same time a deceleration command for another one or another designated one of the servo motors (for example, the servo motor 5') is always given to the inverter circuit (for example, the inverter circuit 4') corresponding to that other servo motor.

Alternatively, the inverter control unit 6 operates in such a manner that at least during a period that a deceleration command for any one or a designated one of the servo motors (for example, the servo motor 5') is given to the inverter circuit (for example, the inverter circuit 4') corresponding to that one servo motor, an acceleration command for another one or another designated one of the servo motors (for example, the servo motor 5) is always given, at the same time, to the inverter circuit (for example, the inverter circuit 4) corresponding to that other servo motor.

As the inverter control unit 6 operates as described above, it follows that, in the above example, when regenerative energy is generated by the servo motor 5' that has decelerated (or generated a deceleration torque or entered a regenerative mode) in response to the deceleration command, there always exists another servo motor 5 that accelerates (or generates an acceleration torque or enters a normal power mode) in response to the acceleration command.

At this time, the regenerative energy from the servo motor 5' is transferred from the inverter circuit 4' to the inverter circuit 4 directly, not via the converter circuit 3, and used to power the servo motor 5. By transferring the regenerative energy within the inverter apparatus 2 in this manner, the utilization efficiency of the regenerative energy is enhanced.

Here, the servo motor 5 corresponds to a first servo motor according to the present invention, while the servo motor 5' corresponds to a second servo motor according to the present invention.

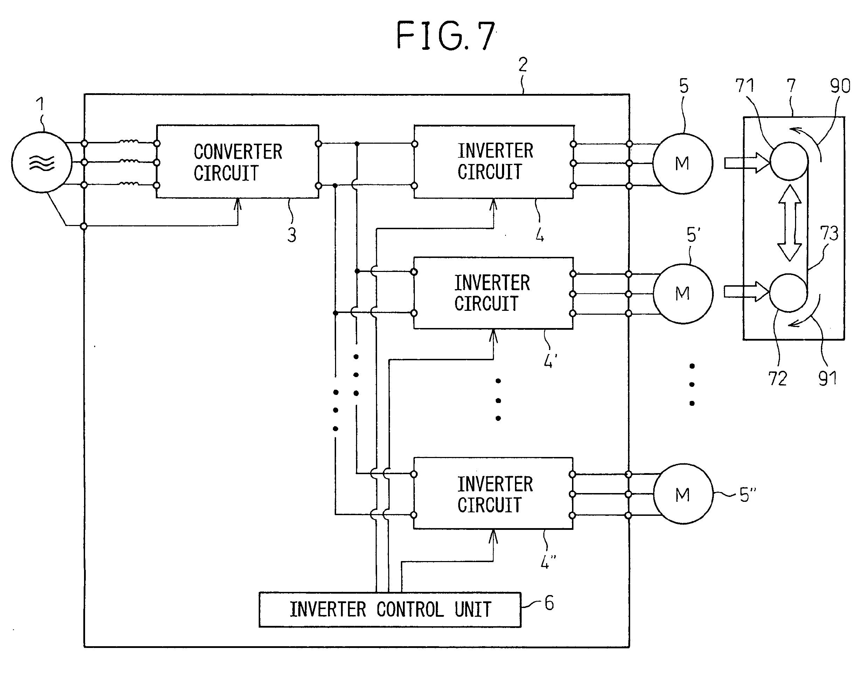

Figure 7 is a diagram for explaining the case where the motive power of the servo motors 5 and 5' driven by the servo motor driving apparatus 2 according to the embodiment of the present invention is supplied to the moving mechanism 7.

As shown, the servo motor 5 is coupled to the moving mechanism 7 in such a manner that the torque from the driving shaft of the servo motor 5 is applied to a first moving member 71 in the moving mechanism 7, while the servo motor 5' is coupled to the moving mechanism 7 in such a manner that the torque from the driving shaft of the servo motor 5' is applied to a second moving member 72 in the moving mechanism 7.

Here, the first moving member 71 and the second moving member 72 are connected by a transmitting member 73, and the torque applied from the servo motor 5 to the first moving member 71 is transmitted via the transmitting member 73 and the second moving member 72 to the driving shaft of the servo motor 5', while on the other hand, the torque applied from the servo motor 5' to the second moving member 72 is transmitted via the transmitting member 73 and the first moving member 71 to the driving shaft of the servo motor 5.

Further, the inverter control unit 6 supplies the inverter control signals to the respective inverter circuits 4 and 4' so that the direction in which the first servo motor 5 exerts its force on the first moving member 71, the second moving member 72, and the transmitting member 73 is opposite to the direction in which the second servo motor 5' exerts its force on the first moving member 71, the second moving member 72, and the transmitting member 73. That is, the inverter control unit 6 performs control so that the torques produced by the first and second servo motors 5 and 5', respectively, are applied to the moving mechanism 7 in such a manner as to oppose each other.

With the servo motors 5 and 5' coupled to the moving mechanism 7 as described above, and with the inverter control unit 6 controlling the inverter circuits 4 and 4' as described above, it becomes possible to control the first and second servo motors 5 and 5' so that, when either one of the motors operates in the regenerative mode, the other motor operates in the normal power mode.

For example, the case where the first moving member 71, the second moving member 72, and the transmitting member 73 are moving in the direction of the force being exerted by the torque produced by the first servo motor 5, is considered.

In this case, as the direction of the torque produced on the driving shaft of the first servo motor 5 is the same as the direction of its rotation, the first servo motor 5 operates in the normal power mode. Here, the inverter control signal that the inverter control unit 6 applies to the inverter circuit 4 provides an acceleration command to the first servo motor 5. On the other hand, in the case of the second servo motor 5', as the direction of the torque produced on its driving shaft is opposite to the direction of its rotation, the second servo motor 5' operates in the regenerative mode and thus generates regenerative energy. In this case, the inverter control signal that the inverter control unit 6 applies to the inverter circuit 4' provides a deceleration command to the second servo motor 5'.

Conversely, when the first moving member 71, the second moving member 72, and the transmitting member 73 are moving in the direction of the force being exerted by the torque produced by the second servo motor 5', then the first servo motor 5 operates in the regenerative mode, while the second servo motor 5' operates in the normal power mode.

With the servo motors 5 and 5' coupled to the moving mechanism 7 as described above, and with the inverter control unit 6 controlling the inverter circuits 4 and 4' as described above, part of the energy being applied to the moving mechanism 7 by the servo motor operating in the normal power mode is converted into the regenerative energy which occurs in the other servo motor operating in the regenerative mode; as this regenerative energy can be fed back for use by the servo motor operating in the normal power mode, its power consumption can be reduced.

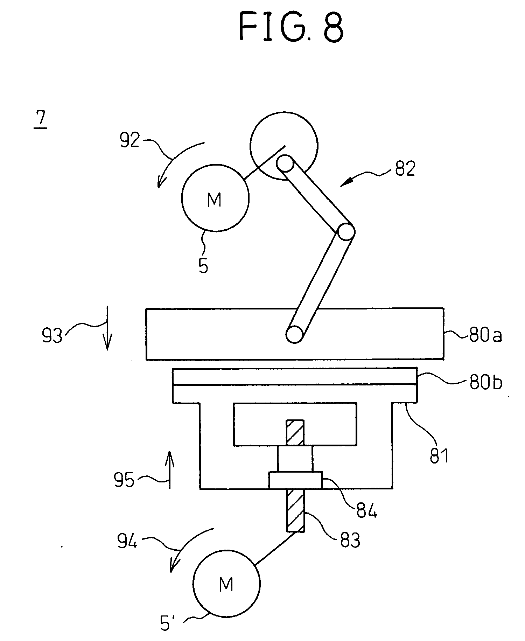

Figure 8 is a diagram schematically showing the structure of a press mechanism, that performs press work, as an example of the moving mechanism 7 to which the servo motors 5 and 5' are coupled. The press mechanism 7 comprises an upper mold 80ₐ and a lower mold 80_{b} which press a workpiece therebetween, a pad 81 which supports the lower mold 80_{b} from below, a transmitting member 82 which receives the torque produced by the first servo motor 5 and converts the torque into rectilinear motion for transmission to the upper mold 80ₐ, and a ballscrew member 83 and a nut member 84 which receive the torque produced by the second servo motor 5' and convert the torque into rectilinear motion to move the pad 81 up and down.

The pad 81, the ballscrew member 83, the nut member 84, and the second servo motor 5' together constitute a die cushion mechanism which applies, to the lower mold 80_{b}, an opposing force acting in a direction 95 opposite to the lowering direction 93 of the upper mold 80ₐ when the workpiece is pressed by the upper and lower molds 80ₐ and 80_{b}, and the second servo motor 5' here acts as a die cushion driving servo motor. On the other hand, the first servo motor 5 acts as a press shaft driving servo motor for driving the upper mold 80ₐ.

The torque produced by the first servo motor 5 acts so as to move the upper mold 80ₐ in the arrow direction 93 in the figure, while the torque produced by the second servo motor 5' acts so as to move the pad 81 in the arrow direction 95 opposite to the arrow direction 93 in the figure.

Accordingly, when the workpiece is being pressed by the upper and lower molds 80ₐ and 80_{b}, that is, when the lower molds 80ₐ and 80_{b} are both moving in the lowering direction 93 of the upper mold 80ₐ, the first servo motor 5 operates in the normal power mode because the direction of its torque coincides with the direction of its rotation while, on the other hand, the second servo motor 5' operates in the regenerative mode because the direction of its torque is opposite to the direction of its rotation.

Accordingly, when the workpiece is being pressed by the upper and lower molds 80ₐ and 80_{b}, that is, when the upper and lower molds 80ₐ and 80_{b} are being pressed together, with the driving force of the first servo motor 5 acting on the second servo motor 5', or more specifically, when the deceleration command is given to the inverter circuit 4' of the second servo motor 5', then the acceleration command is always given to the inverter circuit 4 of the first servo motor 5 at the same time. This condition is the same as that shown in Figure 7.

In this way, the regenerative energy from the second servo motor 5' is transferred from the inverter circuit 4' to the inverter circuit 4 directly, not via the converter circuit 3, and is used to power the first servo motor 5.

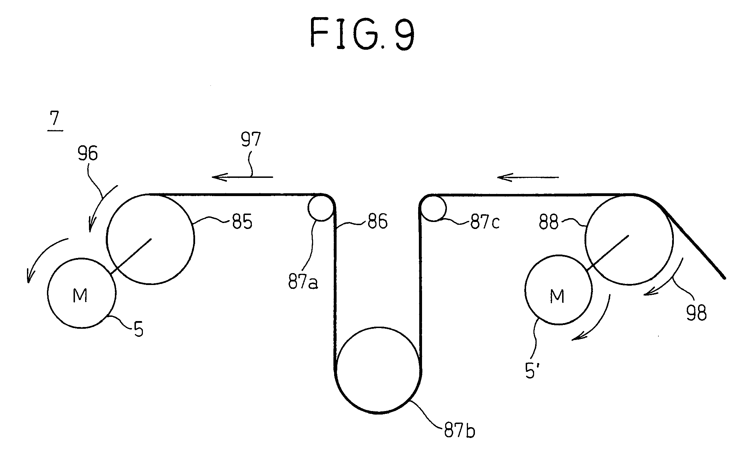

Figure 9 is a diagram schematically showing the structure of a cable winding mechanism for winding a cable or a print medium winding mechanism to be used in a printing machine, as an example of the moving mechanism 7 to which the servo motors 5 and 5' are coupled.

When the moving mechanism 7 is applied to a cable winding mechanism, the cable winding mechanism 7 comprises a take-up drum 85 for winding a cable 86 thereon, a feed drum 88 for feeding the cable 86, and guide pulleys 87ₐ, 87_{b}, and 87_{c} for guiding the cable 86.

The driving shaft of the first servo motor 5 is coupled to the take-up drum 85 in such a manner that the produced torque acts to rotate the take-up drum 85 in the direction indicated by arrow 96 in the figure, while the driving shaft of the second servo motor 5' is coupled to the feed drum 88 in such a manner that the produced torque acts to rotate the feed drum 88 in the direction indicated by arrow 98 in the figure, thus providing back tension to the cable 86. Here, the first servo motor 5 acts as a cable winding servo motor, while the second servo motor 5' acts as a cable feeding servo motor.

Accordingly, when the cable 86 is moving in the direction indicated by arrow 97 in the figure and is thus being taken up by the take-up drum 85, the first servo motor 5 operates in the normal power mode because the direction of its torque coincides with the direction of its rotation, while on the other hand, the second servo motor 5' operates in the regenerative mode because the direction of its torque is opposite to the direction of its rotation. More specifically, the deceleration command is given to the inverter circuit 4' of the second servo motor 5' and, at the same time, the acceleration command is given to the inverter circuit 4 of the first servo motor 5 (the same condition as that shown in Figure 7). In this way, the regenerative energy from the second servo motor 5' is transferred from the inverter circuit 4' to the inverter circuit 4 directly, not via the converter circuit 3, and is used to power the first servo motor 5.

When the moving mechanism 7 is applied to a printing medium winding mechanism to be used in a printing machine, the printing medium winding mechanism 7 comprises a take-up roller 85 for winding a printing medium 86 such as printing paper thereon, a feed roller 88 for feeding the printing medium 86, and guide rollers 87ₐ, 87_{b}, and 87_{c} for guiding the printing medium 86.

The driving shaft of the first servo motor 5 is coupled to the take-up roller 85 in such a manner that the produced torque acts to rotate the take-up roller 85 in the direction indicated by arrow 96 in the figure, while the driving shaft of the second servo motor 5' is coupled to the feed roller 88 in such a manner that the produced torque acts to rotate the feed roller 88 in the direction indicated by arrow 98 in the figure, thus providing back tension to the printing medium 86. Here, the first servo motor 5 acts as a printing medium winding servo motor, while the second servo motor 5' acts as a printing medium feeding servo motor.

Accordingly, when the printing medium 86 is moving in the direction indicated by arrow 97 in the figure and is thus being taken up by the take-up roller 85, the first servo motor 5 operates in the normal power mode because the direction of its torque coincides with the direction of its rotation, while on the other hand, the second servo motor 5' operates in the regenerative mode because the direction of its torque is opposite to the direction of its rotation. More specifically, the deceleration command is given to the inverter circuit 4' of the second servo motor 5' and, at the same time, the acceleration command is given to the inverter circuit 4 of the first servo motor 5 (the same condition as that shown in Figure 7). In this way, the regenerative energy from the second servo motor 5' is transferred from the inverter circuit 4' to the inverter circuit 4 directly, not via the converter circuit 3, and is used to power the first servo motor 5.

According to the present invention, as the regenerative energy occurring from the second servo motor operating in the regenerative mode in response to the deceleration command is supplied to the first servo motor operating in the normal power mode in response to the acceleration command without being passed through the converter circuit, the regenerative energy is efficiently transferred within the servo motor driving apparatus, and the reuse efficiency of the regenerative energy can thus be enhanced.

The above configuration, in which, of the power for driving the servo motor, the regenerative power is supplied without being passed via the converter circuit, also makes it possible to reduce the size of the converter circuit block.

Further, as the first servo motor, to which the acceleration command is given, and the second servo motor, to which the deceleration command is given, are coupled to the moving mechanism in such a manner that the torque produced by one motor is transmitted via the moving mechanism to the other motor, or in such a manner that the torques produced by the first and second servo motors, respectively, are applied to the moving mechanism so as to oppose each other, part of the kinetic energy applied to the moving mechanism by the acceleration of the first servo motor, for example, can be recovered as regenerative energy occurring in the second servo motor and be reused to power the first servo motor. This serves to reduce the electric energy that the servo motor driving apparatus consumes.

The present invention is applicable to an inverter apparatus that drives a plurality of servo motors simultaneously, and more particularly to an inverter apparatus that drives the servo motors in such a manner that, when any one of the servo motors operates in the regenerative mode, another one of the servo motors always operates in the normal power mode, and also to various other machine apparatuses to which motive power is supplied from such a plurality of servo motors.

While the present invention has been described with reference to the preferred embodiments selected only for illustrative purposes, it is apparent to those skilled in the art that various modifications, omissions, and departures can be made to these embodiments without departing from the spirit and scope of the present invention. Further, it is to be understood that the terms used in the appended claims are not limited to the specific meanings used in the embodiments described in this specification.

## Claims

1. A servo motor driving apparatus (2) for driving a plurality of servo motors (5, 5', 5") including at least a first servo motor (5) and a second servo motor (5'), that are coupled to a moving mechanism (7) to supply motive power to said moving mechanism, said servo motor driving apparatus comprising:
a plurality of inverter circuits (4, 4', 4") which supply AC power to said plurality of servo motors (5, 5', 5"), respectively;
a converter circuit (3) which supplies electric power in common to said plurality of inverter circuits (4, 4', 4"); and
an inverter control unit (6) which supplies an acceleration command for said first servo motor (5) and a deceleration command for said second servo motor (5') simultaneously to said inverter circuits (4, 4') corresponding to said respective servo motors (5, 5').

2. A servo motor driving apparatus as claimed in claim 1, wherein said first servo motor (5) and said second servo motor (5') are coupled to said moving mechanism (7) in such a manner that a torque produced by one of said motors is transmitted to the other one of said motors via said moving mechanism.

3. A servo motor driving apparatus as claimed in claim 1, wherein said acceleration command for said first servo motor (5) and said deceleration command for said second servo motor (5') are generated by a program executed on said inverter control unit (6).

4. A servo motor driving apparatus as claimed in claim 1, wherein said inverter control unit (6) performs control so that, at least while said deceleration command is given to said second servo motor (5'), said acceleration command is given to said first servo motor (5).

5. A servo motor driving apparatus as claimed in claim 1, wherein said inverter control unit (6) controls said inverter circuits (4, 4') corresponding to said first servo motor (5) and said second servo motor (5') respectively so that torques produced by said respective motors (5, 5') are applied to said moving mechanism (7) in such a manner as to oppose each other.

6. A servo motor driving apparatus as claimed in any one of claims 1 to 5, wherein
said moving mechanism (7) is a press mechanism,
said first servo motor (5) is a press shaft driving servo motor for said press mechanism, and
said second servo motor (5') is a die cushion driving servo motor for said press mechanism.

7. A servo motor driving apparatus as claimed in any one of claims 1 to 5, wherein
said moving mechanism (7) is a cable winding mechanism,
said first servo motor (5) is a cable winding servo motor for said cable winding mechanism, and
said second servo motor (5') is a cable feeding servo motor for said cable winding mechanism.

8. A servo motor driving apparatus as claimed in any one of claims 1 to 5, wherein
said moving mechanism (7) is a printing medium winding mechanism to be used in a printing machine,
said first servo motor (5) is a winding servo motor for said printing medium winding mechanism, and
said second servo motor (5') is a feeding servo motor for said printing medium winding mechanism.

9. A method for driving a plurality of servo motors (5, 5', 5") including at least a first servo motor (5) and a second servo motor (5'), that supply motive power to a moving mechanism (7) by being supplied with AC power from a plurality of inverter circuits (4, 4', 4") respectively, said plurality of inverter circuits being supplied with electric power from a common converter circuit (3), wherein
normal power operation of said first servo motor (5) and regenerative operation of said second servo motor (5') are performed simultaneously.

10. A driving method as claimed in claim 9, wherein torques produced by said first servo motor (5) and said second servo motor (5'), respectively, are applied to said moving mechanism (7) in such a manner as to oppose each other.
